**Europäisches Patentamt**

**European Patent Office**

**Office européen des brevets**

(11) Numéro de publication: **0 011 563**
**A1**

## (12) DEMANDE DE BREVET EUROPEEN

(21) Numéro de dépôt: **79400857.3**

(22) Date de dépôt: **13.11.79**

(51) Int. Cl.³: **A 22 C 17/02**

(30) Priorité: **15.11.78 FR 7832248**

(43) Date de publication de la demande:
**28.05.80 Bulletin 80/11**

(84) Etats Contractants Désignés:
**AT BE CH DE GB IT LU NL SE**

(71) Demandeur: **Société Anonyme dite LA PARMENTIERE P. BLACHE & CIE**
**7, rue Lavoisier**
**F-77330 Ozoir-La-Ferriere(FR)**

(72) Inventeur: **Saget, Pierre Charles**
**15 Allée Albert Schweitzer**
**F-94300 Vincennes(FR)**

(74) Mandataire: **Harlé, Robert et al,**
**c/o Cabinet Harlé & Lechopiez 21, rue de la Rochefoucauld**
**F-75009 Paris(FR)**

(54) **Appareil pour immobiliser la tête d'un animal de boucherie séparée du corps.**

(57) L'appareil comprend un support (3) tournant autour d'un axe vertical, et portant deux pièces (8), (9) dont la première reçoit la mâchoire inférieure de façon à venir en appui sur les parties osseuses voisines du nez et avec les dents ou le palais, alors que la seconde pièce vient coopérer avec le trou occipital. Ces deux pièces peuvent tourner autour d'un axe commun de façon à placer la tête dans la position la plus commode pour séparer les os et les parties comestibles.
Application à la boucherie.

**EP 0 011 563 A1**

./...

Croydon Printing Company Ltd.

FIG.1

1

**"Appareil pour immobiliser la tête d'un animal de boucherie
séparée du corps "**

La présente invention est relative à un appareil pour le traitement des têtes des animaux de boucherie.

Le traitement des têtes des animaux de boucherie, une fois qu'elles ont été séparées du corps,afin de séparer des os le maximum des parties comestibles,se fait actuellement de façon manuelle.Cette opération exige une grande adresse manuelle ainsi qu'une force physique importante,car certaines têtes d'animaux usuels atteignent un poids de 40kg,et de plus la séparation de la mâchoire inférieure exige un effort considérable,surtout avec une tête fraiche.

Habituellement,l'ouvrier reçoit la tête sur une table et l'immobilise entre une main,un bras et le thorax,ce qui est pénible en raison de la nature glissante des chairs,pendant qu'il sépare les chairs de l'autre main à l'aide d'un outil approprié.

On a proposé un appareil qui immobilise la tête pendant une partie de l'opération,et qui comprend,d'une part,une pièce munie de deux doigts qui pénètrent dans les narines,et d'autre part une butée contre laquelle vient porter la région occipitale.La tête,qui repose sur la table,est ainsi immobilisée dans sa position,ce qui facilite le travail de l'ouvrier. L'appareil comprend en outre un levier pour écarter la mâchoire inférieure.

Cet appareil apporte un soulagement appréciable au travail,mais il n'est efficace que si la tête est maintenue en position horizontale et repose sur la table, car le doigt, pénétrant dans les narines qui sont entourées de parties charnues ou cartilagineuses, ne peuvent supporter le poids de la tête au point de l'immobiliser dans une autre position de façon suffisamment précise, et de ce fait le levier pour écarter la mâchoire inférieure ne peut enlever complètement celle-ci.

On peut faire la même remarque à propos du dispositif du brevet US2.549.937,dans lequel la tête est posée sur la table et maintenue par des doigts latéraux, montés élastiquement.

Il existe certes des dispositifs pour maintenir un jambon ou une partie analogue d'un animal en prenant appui sur les deux extrémités de l'os pour le traiter en la faisant tourner autour de son axe, mais ces dispositifs ne sont pas adaptés à la configuration particulière d'une tête.

La présente invention a pour but de procurer un appareil permettant d'immobiliser la tête d'un animal de boucherie dans une orientation quelconque, de façon à faciliter le travail de séparation des os et des parties comestibles.

La présente invention fournit donc un appareil pour immobiliser la tête d'un animal de boucherie séparée du corps pour faciliter le travail de séparation des os et des parties comestibles, comportant une première pièce engageant la partie avant de la tête, et une seconde pièce engageant la partie occipitale de la tête, des moyens pour forcer les première et seconde pièces l'une vers l'autre ainsi que des moyens pour écarter la mâchoire inférieure.

Dans cet appareil,la première pièce est en forme approximativement d'entonnoir et disposée pour venir en appui,d'une part,avec les dents supérieures et/ou la mâchoire supérieure et,d'autre part,avec la partie supérieure de la région osseuse nasale, lorsqu'on engage la tête dans ladite première partie, la seconde pièce comprend une pointe disposée pour pénétrer dans le trou occipital, et lesdites première et seconde pièces sont capables de tourner autour d'un axe commun et de se rapprocher l'une de l'autre le long de cet axe, et des moyens sont prévus sur au moins l'une des deux pièces pour immobiliser la tête en rotation autour dudit axe pendant le travail de séparation des os et des parties comestibles.

De préférence, les deux pièces sont montées sur un support commun, ce support étant capable de tourner autour d'un axe vertical par rapport à un bâti fixe et d'être immobilisé ou freiné en rotation autour de ce bâti fixe pendant le travail. Avantageusement, le support commun comprend deux parties montées télescopiquement et portant chacune une des deux pièces, ainsi que des moyens agissant sur ces deux parties de façon à rapprocher les deux pièces selon leur axe commun, et au moins un des moyens pour immobiliser ou freiner les deux pièces en rotation autour de leur axe commun ou le support autour de l'axe vertical est constitué par un frein à friction de force réglable. Suivant une réalisation intéressante, l'appareil comprend une potence fixe à laquelle est relié un crochet d'arrachage de la mâchoire inférieure par l'intermédiaire d'un vérin.

L'invention sera décrite plus en détail en se référant à un exemple non limitatif de réalisation selon l'invention, à l'aide des figures parmi lesquelles :

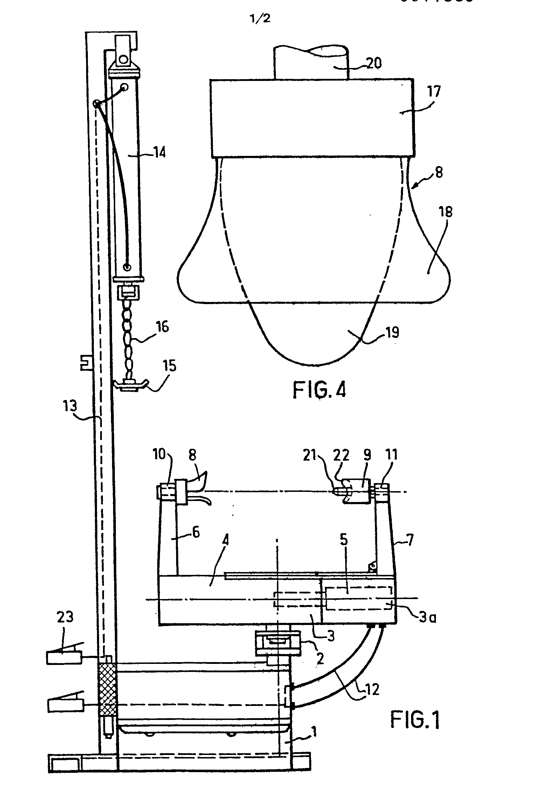

Fig. 1 est une vue d'ensemble, en élévation de l'appareil, et

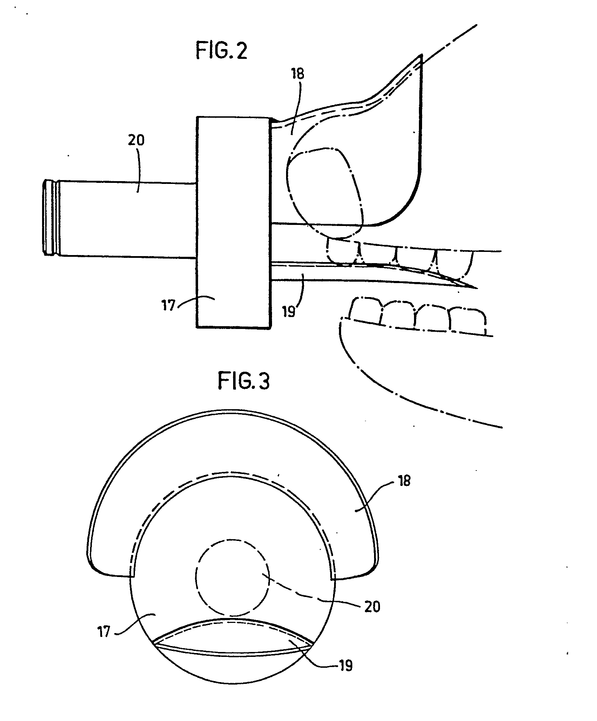

Figs. 2, 3 et 4 sont des vues en élévation et des vues partielles de face et de dessus de la première pièce du même appareil.

L'appareil comprend un socle 1, destiné à être fixé sur le sol, et qui porte, par un pivot à axe vertical 2, un support télescopique 3. Ce support comprend deux parties 4 et 5 qui peuvent coulisser horizontalement l'unepar rapport à l'autre sous l'action d'un vérin à double effet, à axe horizontal, 3a . La partie 4 porte, par l'intermédiaire d'un bras vertical 6, la "première pièce" 8 destinée à recevoir le museau de l'animal, cependant que la partie 5 porte par l'intermédiaire d'un bras vertical 7 la "seconde pièce" 9 destinée à soutenir la partie occipitale de la tête. Les bras 6 et 8 sont de même hauteur et portent les pièces 7 et 9 par l'intermédiaire de pivots 10 et 11 coaxiaux. Des conduits souples 12 permettent de relier le vérin d'actionnement du support télescopique à une source d'air comprimé, non représentée.

Le socle porte en outre une potence 13, qui supporte un vérin 14 monté à pivot, et capable d'exercer une traction vers le haut sur un crochet 15 auquel il est relié par une chaîne 16.

La première pièce 7 de l'appareil est de forme particulière, adaptée à sa fonction. Elle comprend une base circulaire 17 sur laquelle sont fixées une partie d'appui supérieure 18 et une partie d'appui inférieure 19. La partie d'appui supérieure a la forme d'un demi-entonnoir formé, de façon approchée, de deux fractions de cône raccordées entre elles et d'angle au sommet croissant lorsqu'on s'écarte de la base. Cette partie est destinée à venir en appui sur la partie supérieure osseuse de la région nasale. La forme décrite ici correspond à l'anatomie des bovidés, mais il est clair que d'autres formes correspondent à d'autres espèces. La partie d'appui inférieure 19 a une forme différente, qui est celle d'une languette à courbure assez faible dirigée vers l'extérieur, et ne constituant pas un entonnoir. Cette partie s'amincit vers son extrémité, comme on peut le voir sur la figure 4. La forme de cette pièce correspond à peu près à celle du palais d'un animal et permet un appui solide sur les dents ou la mâchoire supérieure.

Du côté opposé aux parties d'appui 2 et 3, la base 1 se prolonge par la tige 20 du pivot 10, dont l'axe est sensiblement confondu avec celui de la partie supérieure d'appui 2.

La seconde pièce 9 est de forme plus simple; elle comporte une pointe 21 de longueur et diamètre convenables pour pénétrer dans le trou occipital, et un épaulement 22 destiné à venir en appui sur la partie osseuse qui entoure ce trou. L'axe de la pointe 21 est sensiblement confondu avec celui du pivot 11.

Une tête d'animal maintenue entre les deux pièces 8 et 9 peut pivoter autour de l'axe commun des pivots 10 et 11. La répartition des masses fait qu'elle a tendance à prendre une position d'équilibre où son centre de gravité se trouve au-dessous de l'axe.

Pour permettre un travail aisé dans d'autres positions, l'axe du pivot 11 comporte un frein, constitué par des disques à friction serrés avec une force réglable par l'intermédiaire d'écrous agissant sur des rondelles Belleville. La tête peut être ainsi immobilisée à volonté dans n'importe quelle orientation par rapport à l'axe des pivots 10-11. Il est clair qu'un dispositif analogue peut être prévu pour le pivot 10.

Le pivot vertical 2 est pourvu d'un frein analogue.

L'ouvrier place la partie avant de la tête à traiter entre les parties 18-19 de la pièce 8, il introduit la pointe 21 dans le trou occipital et serre la tête à l'aide du vérin du support télescopique 3. Le dispositif de frein du pivot 11 est réglé avec une force suffisante pour que la tête ne se déplace pas pendant son travail tout en lui permettant des changements d'orientation à volonté.

Pour enlever la mâchoire inférieure, le crochet 15 est engagé dans celle-ci, la tête étant maintenue en position retournée, entre les pièces 8 et 9, et on actionne progressivement le vérin 14, avec possibilité d'arrêt pour couper les muscles afin de faciliter l'arrachage.

Les commandes des vérins peuvent être faites au pied.

Ainsi, les efforts physiques pour maintenir la tête pendant le découpage et l'arrachage de la mâchoire inférieure sont supprimés, et l'ouvrier travaille de façon plus confortable et plus efficace.

En particulier, il est avantageux que le vérin 14 qui sert à l'arrachage de la mâchoire soit pourvu d'une pé-

23

dale à double commande/qui permet d'immobiliser la vérin à tout endroit de sa course, ce qui permet d'opérer par petites impulsions en évitant qu'il se produise un choc violent à la fin de l'arrachage. Bien entendu, l'ensemble du vérin et de sa commande peut être remplacé par tout dispositif équivalent.

Revendications de brevet

1. Appareil pour immobiliser la tête d'un animal de boucherie séparée du corps pour faciliter le travail de séparation des os et des parties comestibles, comportant une première pièce engageant la partie avant de la tête, et une seconde pièce engageant la partie occipitale de la tête, lesdites première et seconde pièces étant capables de tourner autour d'un axe commun et de se rapprocher l'une de l'autre le long de cet axe, des moyens pour forcer les première et seconde pièces l'une vers l'autre, des moyens prévus sur au moins l'une des deux pièces pour immobiliser la tête en rotation autour dudit axe pendant le travail de séparation des os et des parties comestibles, ainsi que des moyens pour écarter la mâchoire inférieure, caractérisé en ce que la première pièce est en forme approximativement d'entonnoir et disposée pour venir en appui, d'une part, avec les dents supérieures et/ou la mâchoire supérieure et, d'autre part, avec la partie supérieure de la région osseuse nasale, lorsqu'on engage la tête dans ladite première partie, et en ce que la seconde pièce comprend une pointe disposée pour pénétrer dans le trou occipital.

2. Appareil selon la revendication 1, dans lequel les deux pièces sont montées sur un support commun, caractérisé en ce que ce support est capable de tourner autour d'un axe vertical par rapport à un bâti fixe et d'être immobilisé ou freiné en rotation autour de ce bâti fixe pendant le travail.

3. Appareil selon la revendication 2, caractérisé en ce que le support commun comprend deux parties montées télescopiquement et portant chacune une des deux pièces, ainsi que des moyens agissant sur ces deux parties de façon à rapprocher les deux pièces selon leur axe commun.

4. Appareil selon l'une des revendications 1 à 3, caractérisé en ce qu'au moins un des moyens pour immobiliser ou freiner les deux pièces en rotation autour de leur axe commun ou le support autour de l'axe vertical est constitué par un frein à friction de force réglable.

5. Appareil selon l'une des revendications 1 à 3, caractérisé en ce qu'il comprend une potence fixe à laquelle est reliée un crochet d'arrachage de la mâchoire inférieure par l'intermédiaire d'un vérin.

6. Appareil selon la revendication 5, caractérisé en ce que le vérin du crochet d'arrachage est pourvu d'une commande au pied qui permet d'immobiliser ledit vérin à tout endroit de sa course.

0011563

1/2

FIG. 4

FIG. 1

0011563

2/2

FIG.2

FIG.3

**Office européen des brevets**

# RAPPORT DE RECHERCHE EUROPEENNE

Numéro de la demande
EP 79 40 0857

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | DE - A - 2 201 561 (BLUMER) <br> * Page 6, lignes 10-25; figure 3 * <br><br> -- | 1,3 | A 22 C 17/02 |
| | US - A - 2 090 234 (ROBINOWITZ) <br> * L'ensemble * <br><br> -- | 1,2 | |
| | FR - A - 2 329 207 (SONCINI) <br> * Page 13, lignes 6-31 * <br><br> -- | 6 | |
| A | US - A - 3 445 885 (REITZ) <br> * L'ensemble * <br><br> -- | 1 | |
| A,D | US - A - 2 549 937 (SCHMIDT) <br> * Revendication 1 * <br><br> ---- | 1 | |

**DOMAINES TECHNIQUES RECHERCHES (Int. Cl. ³)**

A 22 C
A 22 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-01-1980 | DE LAMEILLEURE |

OEB Form 1503.1   06.78